# EUROPEAN PATENT APPLICATION

(11) **EP 4 818 488 A1**
(43) Date of publication of application: **07.10.2026**
(21) Application number: 26170715.2
(22) Date of filing: 02.04.2026
(51) Int. Cl.: F02C 3/107, F01D 15/10, F02C 7/36, F02K 5/00, F16H 1/22

(54) **DOUBLE OFFSET REDUCTION GEARBOX WITH MOTOR DRIVE FOR TURBOPROP**

(30) Priority: 04.04.2025 US 202519170303
(71) Applicant: Pratt & Whitney Canada Corp., Longueuil, Québec J4G 1A1 (CA)
(72) Inventor: DUROCHER, Eric S., (01BE5) Longueuil, J4G 1A1 (CA); WEAVER, Paul, (01BE5) Longueuil, J4G 1A1 (CA); BRITO, Roberto, (01BE5) Longueuil, J4G 1A1 (CA); CHATELOIS, Bruno, (01BE5) Longueuil, J4G 1A1 (CA)
(74) Representative: Dehns

(57) **Abstract**

A motorized gear system (100) of a gas turbine engine (20), having: a reduction gear (23) including: an input shaft (131), driven by an engine output shaft (161); a first branch (140) having a first shaft (141) and a first gearset (151), driven by the input shaft (131); a second branch (150) having a second shaft (151) and a second gearset (152), driven by the input shaft (131); an output shaft (161), driven by the first branch (140) and the second branch (150); and wherein the motorized gear system (100) includes a first motor (120A), coupled to the first branch (140).

## Description

### BACKGROUND

Exemplary embodiments of the invention pertain to the art of turboprops and more specifically to a double offset reduction gearbox with motor drive for a turboprop.

Relying exclusively on output power from a gas turbine engine to drive a bladed rotor of a turboprop through all phases of flight may be inefficient. Alternatively, there may be instances where the gas turbine engine can provide power exceeding requirements for driving the bladed rotor, and wasting that power is also inefficient.

### BRIEF DESCRIPTION

According to a first aspect of the invention, a motorized gear system of a gas turbine engine includes: a reduction gear including: an input shaft, driven by an engine output shaft; a first branch having a first shaft and a first gearset, driven by the input shaft; a second branch having a second shaft and a second gearset, driven by the input shaft; an output shaft, driven by the first branch and the second branch; and wherein the motorized gear system includes a first motor, coupled to the first branch.

In addition to the above or as an alternate, the input shaft extends from a forward end to an aft end, and a first gear mesh is formed on a first portion of the input shaft, the first portion of the input shaft having a first diameter; the first branch has a second shaft that extends from a forward end to an aft end, and the first gearset includes a second gear mesh formed on a first portion having a second diameter that is larger than the first diameter, wherein the second gear mesh engages the first gear mesh; the first branch has a second portion that is forward of the first portion, and the first gearset includes a third gear mesh formed on the second portion of the first branch, wherein the second portion of the first branch has a third diameter that is smaller than the second diameter; and the output shaft extends from a forward end to an aft end, and a fourth spline is formed on a first portion of the output shaft having a fourth diameter that is larger than the second diameter, wherein the fourth gear mesh engages the third gear mesh.

In addition to any of the above or as an alternate, the forward end of the first branch has a motor spline that engages the first motor.

In addition to any of the above or as an alternate, the first and second branches are configured the same as each other.

In addition to any of the above or as an alternate, a rotational center of the input shaft, the first branch, and the second branch are on a common transverse axis.

In addition to any of the above or as an alternate, the system includes a second motor coupled to the second branch.

In addition to any of the above or as an alternate, the input shaft has an input flange on the aft end and an output flange on the forward end of the output flange.

According to another aspect of the invention, a gas turbine engine includes: an engine core; an engine output shaft, driven by the engine core; a motorized gear system including a reduction gear, coupled to the engine output shaft, wherein the reduction gear includes: an input shaft, driven by the engine output shaft; a first branch having a first shaft and a first gearset, driven by the input shaft; a second branch having a second shaft and a second gearset, driven by the input shaft; an output shaft, driven by the first branch and the second branch; and wherein the motorized gear system includes a first motor, coupled to the first branch, and a bladed rotor, driven by the output shaft.

In addition to any of the above or as an alternate, the input shaft extends from a forward end to an aft end, wherein the aft end is coupled to the engine output shaft, and a first gear mesh is formed on a first portion of the input shaft, the first portion of the input shaft having a first diameter; the first branch has a second shaft that extends from a forward end to an aft end, and the first gearset includes a second gear mesh formed on a first portion having a second diameter that is larger than the first diameter, wherein the second gear mesh engages the first gear mesh; the first branch has a second portion that is forward of the first portion, and the first gearset includes a third gear mesh formed on the second portion of the first branch, wherein the second portion of the first branch has a third diameter that is smaller than the second diameter; and the output shaft extends from a forward end to an aft end, and a fourth gear mesh is formed on a first portion of the output shaft having a fourth diameter that is larger than the second diameter, wherein the fourth gear mesh engages the third gear mesh.

In addition to any of the above or as an alternate, the forward end of the first branch has a motor spline that engages the first motor.

In addition to any of the above or as an alternate, the first and second branches are configured the same as each other.

In addition to any of the above or as an alternate, a rotational center of the input shaft, the first branch, and the second branch are on a common transverse axis.

In addition to any of the above or as an alternate, the engine includes a second motor coupled to the second branch.

In addition to any of the above or as an alternate, the input shaft has an input flange on the aft end to connect with the engine output shaft and an output flange on the forward end to connect with a rotor blade.

In addition to any of the above or as an alternate, the engine is a turboprop.

According to another aspect of the invention, a method of operating a gas turbine engine includes: driving a bladed-rotor via a reduction gear of a motorized gear system, the reduction gear having an input shaft that is driven by an engine output shaft of the gas turbine engine, a first branch that is driven by the input shaft, a second branch that is driven by the input shaft, an output shaft that is driven by the first branch and the second branch, and the motorized gear system including a first motor coupled to the first branch, and selectively controlling the first motor to operate in a motor mode and provide supplemental power to drive the bladed-rotor.

In addition to any of the above or as an alternate, the method includes selectively controlling the first motor to operate in a generator mode to generate power from rotation of the engine output shaft.

In addition to any of the above or as an alternate, the method includes selectively controlling a second motor connected to the second branch to operate in a motor mode to provide supplemental power to drive the bladed-rotor.

In addition to any of the above or as an alternate, the method includes selectively controlling the second motor to operate in a generator mode to generate power from rotation of the engine output shaft.

In addition to any of the above or as an alternate, driving the bladed-rotor comprises driving a propeller of a turboprop.

### BRIEF DESCRIPTION OF THE DRAWINGS

The following descriptions should not be considered limiting in any way. With reference to the accompanying drawings, like elements are numbered alike:
FIG. 1 is a cross-sectional view of a gas turbine engine with a double offset reduction gearbox having a motor drive mounted to the front of the gearbox housing;
FIG. 2 is a perspective view of the double offset reduction gearbox with the motor drive;
FIG. 3 shows a side view of an input shaft of the double offset reduction gearbox;
FIG. 4 shows a side view of the double offset reduction gearbox with the motor drive;
FIG. 5 shows a front perspective view of the engine with a double offset reduction gearbox with two motor drives mounted to the front of the engine; and
FIG. 6 is a method of operation a turboprop with a front mounted double offset reduction gearbox having a motor drive.

### DETAILED DESCRIPTION

A detailed description of one or more embodiments of the disclosed apparatus and method are presented herein by way of exemplification and not limitation with reference to the Figures.

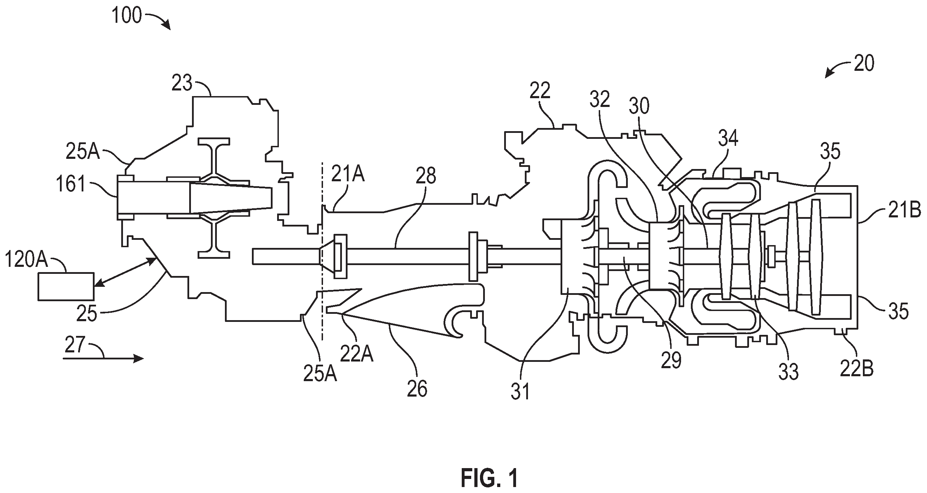

FIG. 1 schematically illustrates a turboprop engine 20, which is a type of gas turbine engine. The engine 20 includes a core 21 extending from a forward end 21A to an aft end 21B. The core 21 is surrounded by a turbomachinery housings (which for simplicity are collectively referred to as a turbomachinery housing 22) extending from a forward end 22A to an aft end 22B. The core 21 mates with the reduction gearbox (for simplicity, a gearbox) 23, that drives an output shaft 161. The gearbox 23 is encased in gearbox housings (which for simplicity are collectively referred to as a gearbox housing 25). The gearbox housing 25 extends from a forward end 25A to an aft end 25 that is coupled to the forward end 22A of the turbomachinery housing 22. The core 21 includes an air inlet 26 that receives an airflow 27. The core 21 further includes a power turbine shaft 28, low pressure compressor shaft 29 and a high pressure compressor shaft 30. These shafts are operationally coupled to a low pressure compressor 31 and a high pressure compressor 32. The engine 20 includes a low pressure turbine 33, a high pressure turbine 34 and a power turbine 35. The aft end 21B of the core 21 includes a primary exit exhaust nozzle 35 .

As shown in FIG. 1, the engine 20 includes a motorized gear 100. The motorized gear system 100 includes the reduction gearbox 23 within the gearbox housing 25 and a first motor 120A coupled to the forward end 25A of the gearbox housing 25.

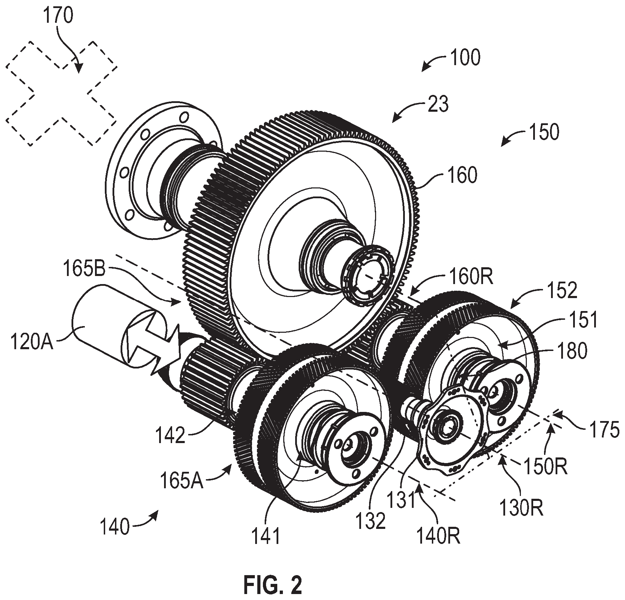

Turning to FIG. 2, the reduction gear 23 of the reduction gear system 100 includes an input shaft 131 having an input gear 132, configured for being driven by the power turbine shaft 28. A first branch 140, having a first shaft 141 and a first gear 142 is driven by the input shaft 131. A second branch 150, having a second shaft 151 and a second gear 152 is driven by the input shaft 131. An output shaft 161 having an output gear 162 is driven by the first branch 140 and the second branch 150. As discussed in greater detail below, the input shaft 131, the first and second branches 140, 150, and the output shaft 161 are configured to provide a first reduction stage 165A and a second reduction stage 165B. The first reduction stage 165A is provided by interactions between the input shaft 131 and the first and second branches 140, 150. The second stage 165B is provided by interactions between the output shaft 161 and the first and second branches 140, 150. This configuration defines a double offset reduction gear. The first motor 120A is coupled to the first branch 140. A bladed-rotor 170, such as a propeller, is driven by the output shaft 161.

The first branch 140 and the second branch 150 may be configured the same as each other. That is, a discussion herein of the first branch 140 applies to the second branch 150 unless otherwise indicated. The input shaft 131 has an input shaft rotational center 130R. The first branch 140 has a first rotation center 140R. The second branch 150 has second rotation center 150R. The output shaft 161 has an output rotation center 160R. The rotational centers 130R, 140R and 150R of the input shaft 131, the first branch 140, and the second branch 150 are on a common transverse axis 175. The rotational center 130R of the input shaft 131 is midway between the rotational centers 140R, 150R of the first and second branches 150 along the transverse axis 175. The rotational center 160R of the output shaft 161 is aligned with the rotational center 130R of the input shaft 131 along the transverse axis 175 and laterally offset (e.g., along a lateral axis 180 that is normal to the transverse axis 175) from transverse axis 175.

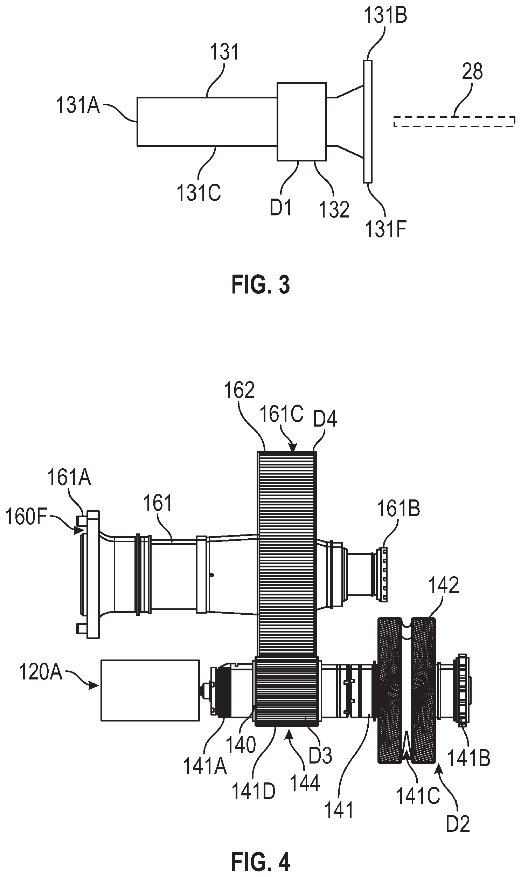

Turning to FIG. 3, the input shaft 131 that extends from a forward end 131A to an aft end 131B. The aft end 131B is coupled to the power turbine shaft 28. A first gear 132 is formed on a first portion 131C of the input shaft 131. The first portion 131C of the input shaft 131 has a first diameter D1.

Turning to FIG. 4, the first branch 140 has a shaft 141 that extends from a forward end 141A to an aft end 141B and incorporates two gears 142 &144. The first gear 142 is formed on a first portion 141C of the first branch 140, i.e., along the shaft 141, having a second diameter D2 that is larger than the first diameter D1. The gear 142 is located along the shaft 141 to engage the first gear 132, forming the first stage of reduction 165A. The second gear 144 formed on the second portion 141D of the first branch 140 and has a third diameter D3 that is smaller than the second diameter D2. The gear 144 is located along the shaft 141 to engage the output gear 160, forming the second stage of reduction 165B. As indicated, the second branch 150 is configured the same as the first branch 140, such that the second shaft 151 is configured the same as the first shaft 141 and the second gearset 152 is configured the same as the first gearset . The second branch 150 therefore simultaneously engages the input shaft 131 the same way the first branch 140 engages the first shaft 131. As shown in FIG. 3, the forward end 141A of the first branch 140 has a motor spline 146. The motor spline 146 engages the first motor 120A.

The output shaft 161 extends from a forward end 161A to an aft end 161B. A gear 162 is formed on a first portion 161C of the output shaft 161. The first portion 161C of the output shaft 161 has a fourth diameter D4 that is larger than the third diameter D3. The gear 160 is located along the output shaft 161 and engages gear 144 of the first branch 140 and a same gear mesh of the second branch 140. An output flange 160F is located at the forward end 161A of the output shaft 161 to engage the bladed-rotor 170. As indicated, the second branch 150 is configured the same as the first branch 140, and the second branch 150 therefore simultaneously engages the output shaft 161 the same way the first branch 140 engages the output shaft 161.

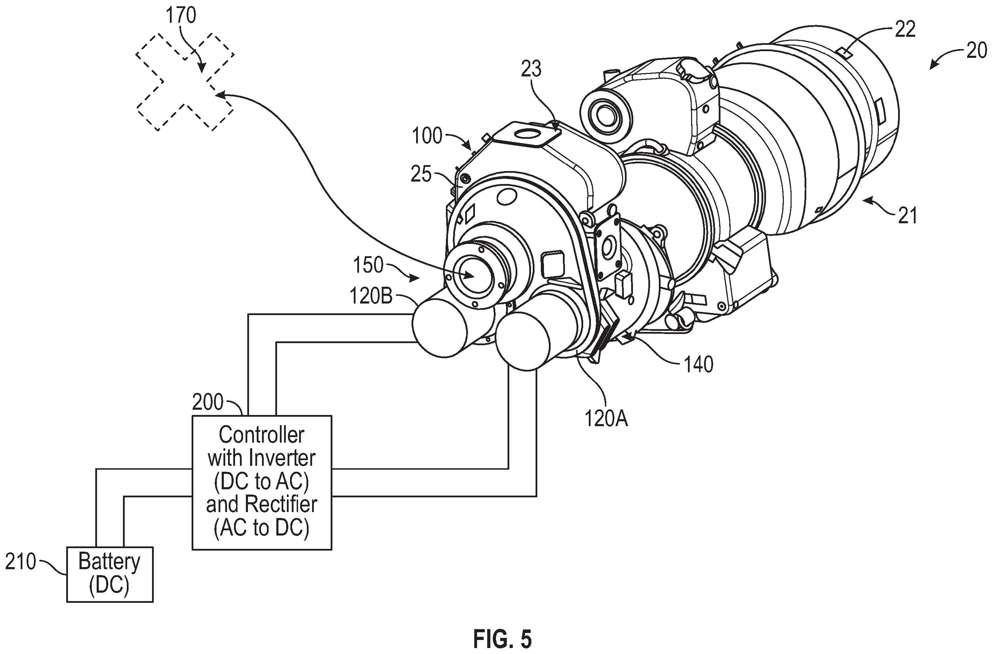

Turning to FIG. 5, the figure shows the turbomachinery housing 22 with the gearbox housing 25 connected to it. The core 21 and reduction gear 23, discussed in detail above, are omitted for simplicity. The first motor 120A is operationally coupled to the first branch 140. In one embodiment, a second motor 120B is operationally coupled to the second branch 150. The first and second motors 120A, 120B may be configured the same as each other.

The motors 120A, 120B, whether acting alone or together, may act in a motor mode or a generator mode. A motor mode may be utilized to provide supplemental power for driving the bladed-rotor 170 when the core 21 is powered down during cruise or if additional power is required to the bladed-rotor 170 during other phases of flight. Alternatively, the motors 120A, 120B may operate in a generator mode and bleed energy from the core to power subsystems of the engine 20 or aircraft to which the engine 20 is mounted. A controller 200 with an inverter (that converts DC to AC) and a rectifier (that converts AC to DC) may be provided and attached to the motors 120A, 120B. A battery 210 may be connected to the controller 200. During the motor mode of the motors 120A, 120B, power from the battery 210 may drive the motors 120A, 120B. During the generator mode of the motors 120A, 120B, in one mode of operation, the power bled from the core 21 may be utilized to recharge the battery 210.

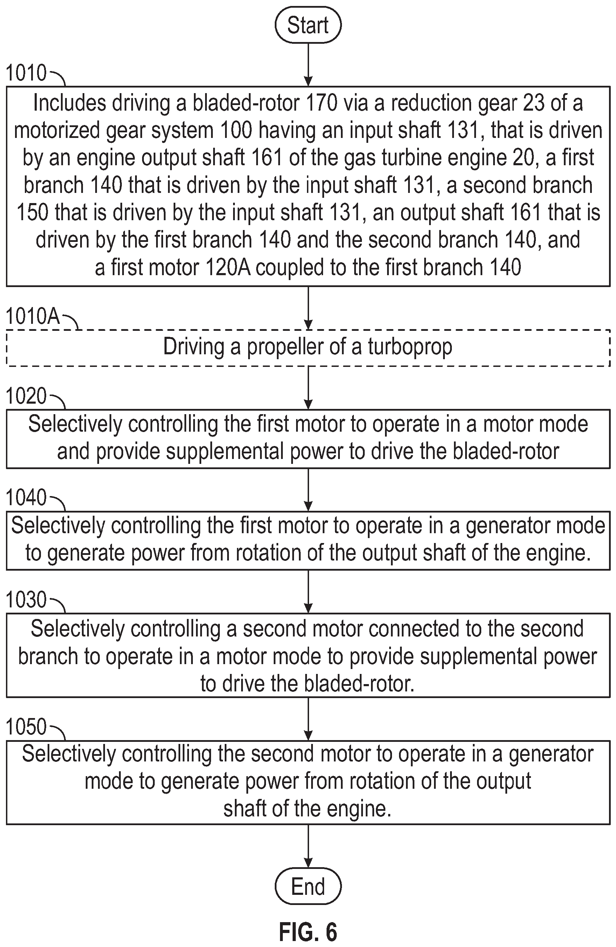

Turning to FIG. 6, a flowchart shows a method of operating a gas turbine engine 20, which may be turboprop. Boxes in dashed lines in the flowchart represent further explanations, including alternative embodiments, of one or more preceding steps and are not intended to limit the scope of the embodiments.

As shown in block 1010, the method includes driving a bladed-rotor 170 via a reduction gear 23 of a motorized gear system 100 having an input shaft 131, that is driven by an engine output shaft 161 of the gas turbine engine 20, a first branch 140 that is driven by the input shaft 131, a second branch 150 that is driven by the input shaft 131, an output shaft 161 that is driven by the first branch 140 and the second branch 150, and a first motor 120A coupled to the first branch 140. As shown in block 1010, driving the bladed-rotor (block 1010) includes driving a propeller of a turboprop.

As shown in block 1020, the method includes selectively controlling the first motor 120A connected to the first branch 140 to operate in a motor mode and provide supplemental power to drive the bladed-rotor 170. As shown in block 1030, the method includes selectively controlling the first motor 120A to operate in a generator mode to generate power from rotation of the output shaft 161 of the engine 20. As shown in block 1040, the method includes selectively controlling a second motor 120B connected to the second branch 150 to operate in a motor mode to provide second supplemental power to drive the bladed-rotor 170. As shown in block 1050, the method includes selectively controlling the second motor 120B to operate in a generator mode to generate power from rotation of the output shaft of the engine 20.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A motorized gear system (100) of a gas turbine engine (20), comprising a reduction gear (23) including:
an input shaft (131), driven by an engine output shaft;
a first branch (140) having a first shaft (141) and a first gearset, driven by the input shaft (131);
a second branch (150) having a second shaft (151) and a second gearset (152), driven by the input shaft (131); and
an output shaft (161), driven by the first branch (140) and the second branch (150), wherein the motorized gear system (100) includes a first motor (120A), coupled to the first branch (140).

2. The system of claim 1, wherein:
the input shaft (131) extends from a forward end (131A) to an aft end (131B), and a first gear mesh is formed on a first portion (131C) of the input shaft (131), the first portion (131C) of the input shaft (131) having a first diameter (D1);
the first shaft (141) extends from a forward end (141A) to an aft end (141B), and the first gearset includes a second gear mesh formed on a first portion (141C) of the first branch (140) having a second diameter (D2) that is larger than the first diameter (D1), wherein the second gear mesh engages the first gear mesh;
the first branch (140) has a second portion (141D) that is forward of the first portion (141C), and the first gearset (151) includes a third gear mesh formed on the second portion (141D) of the first branch (140), wherein the second portion (141D) of the first branch (140) has a third diameter (D3) that is smaller than the second diameter (D2); and
the output shaft (161) extends from a forward end (161A) to an aft end (161B), and a fourth gear mesh is formed on a first portion (161C) of the output shaft (161) having a fourth diameter (D4) that is larger than the second diameter (D2), wherein the fourth gear mesh engages the third gear mesh.

3. The system of claim 1 or 2, wherein the input shaft (131) has an input flange (131F) on the aft end (131B), and the output shaft (161) has an output flange (160F) on the forward end (161A).

4. A gas turbine engine (20), comprising:
an engine core (21);
an engine output shaft (161), driven by the engine core (21);
a motorized gear system (100) including a reduction gear (23), coupled to the engine output shaft (161), wherein the reduction gear (23) includes:
an input shaft (131), driven by the engine output shaft (161);
a first branch (140) having a first shaft (141) and a first gearset (151), driven by the input shaft (131);
a second branch (150) having a second shaft (151) and a second gearset (152), driven by the input shaft (131); and
an output shaft (161), driven by the first branch (140) and the second branch (150),
wherein the motorized gear system (100) includes a first motor (120A), coupled to the first branch (140), and a bladed rotor (170), driven by the output shaft (161).

5. The engine (20) of claim 4, wherein:
the input shaft (131) extends from a forward end (131A) to an aft end (131B), wherein the aft end (131B) is coupled to the engine output shaft (161), and a first gear mesh is formed on a first portion (131C) of the input shaft (131), the first portion (131C) of the input shaft (131) having a first diameter (D1);
the first shaft (141) extends from a forward end (141A) to an aft end (141B), and the first gearset includes a second gear mesh formed on a first portion (141C) of the first branch (140) having a second diameter (D2) that is larger than the first diameter (D1), wherein the second gear mesh engages the first gear mesh;
the first branch (140) has a second portion (141D) that is forward of the first portion (141C), and the first gearset (151) includes a third gear mesh formed on the second portion (141D) of the first branch (140), wherein the second portion (141D) of the first branch (140) has a third diameter (D3) that is smaller than the second diameter (D2); and
the output shaft (161) extends from a forward end (161A) to an aft end (161B), and a fourth gear mesh is formed on a first portion (161C) of the output shaft (161) having a fourth diameter (D4) that is larger than the second diameter (D2), wherein the fourth gear mesh engages the third gear mesh.

6. The system of claim 2, or engine (20) of claim 5, wherein the forward end (141A) of the first branch (140) has a motor spline (146) that engages the first motor (120A).

7. The system or engine (20) of any preceding claim, wherein the first and second branches (140; 150) are configured the same as each other.

8. The system or engine (20) of any preceding claim, wherein a rotational center (130R) of the input shaft (131), the first branch (140), and the second branch (150) are on a common transverse axis (175).

9. The system or engine of any preceding claim, including a second motor (120B) coupled to the second branch (150).

10. The system or engine (20) of any preceding claim, wherein the input shaft (131) has an input flange (131F) on the aft end (131B) to connect with the engine output shaft (161), and the output shaft (161) has an output flange (160F) on the forward end (161A) to connect with a rotor blade.

11. The engine (20) of any of claims 5 to 10, wherein the engine (20) is a turboprop.

12. A method of operating a gas turbine engine (20) comprising:
driving a bladed-rotor (170) via a reduction gear (23) of a motorized gear system (100), the reduction gear (23) having an input shaft (131) that is driven by an engine output shaft (161) of the gas turbine engine (20), a first branch (140) that is driven by the input shaft (131), a second branch (150) that is driven by the input shaft (131), an output shaft (161) that is driven by the first branch (140) and the second branch (150), and the motorized gear system (100) including a first motor (120A) coupled to the first branch (140), and
selectively controlling the first motor (120A) to operate in a motor mode and provide supplemental power to drive the bladed-rotor (170).

13. The method of claim 12, further comprising selectively controlling the first motor (120A) to operate in a generator mode to generate power from rotation of the engine output shaft (161).

14. The method of claim 12 or 13, further comprising:
selectively controlling a second motor (120B) connected to the second branch (150) to operate in a motor mode to provide supplemental power to drive the bladed-rotor (170); and/or
selectively controlling the second motor (120B) to operate in a generator mode to generate power from rotation of the engine output shaft (161).

15. The method of any of claims 12 to 14, wherein driving the bladed-rotor (170) comprises driving a propeller of a turboprop.
